# EUROPEAN PATENT APPLICATION

(11) **EP 4 273 683 A1**
(43) Date of publication of application: **08.11.2023**
(21) Application number: 22756417.6
(22) Date of filing: 07.02.2022
(51) Int. Cl.: G06F 3/04812, G06F 3/041, G06F 3/0488

(54) **ELECTRONIC DEVICE FOR CONTROLLING MOVEMENT OF POINTER, AND OPERATION METHOD THEREOF**

(30) Priority: 17.02.2021 KR 20210020954
(71) Applicant: Samsung Electronics Co., Ltd., Suwon-si, Gyeonggi-do 16677 (KR)
(72) Inventor: PARK, Seungkyu, Suwon-si, Gyeonggi-do 16677 (KR)
(74) Representative: Nederlandsch Octrooibureau
(86) International application number: PCT/KR2022/001848
(87) International publication number: WO 2022/177216

(57) **Abstract**

An electronic device, according to various embodiments, comprises: a first housing comprising a first surface, and a second surface facing the direction opposite from the direction in which the first surface is facing; a second housing comprising a third surface corresponding to the first surface of the first housing, and a fourth surface facing the direction opposite from the direction in which the third surface is facing; a hinge rotatably connecting the first housing and the second housing; a display disposed on the first surface of the first housing; a touch pad disposed on the third surface of the second housing; and at least one processor. The at least one processor may be configured to: display a pointer on the display; on the basis of receiving a preset input, identify a touch input moving from an initial input location on the touch pad; and, in response to the touch input, move the pointer at a speed corresponding to the moving distance of the touch input, according to a pointer moving method corresponding to the preset input. Other various embodiments may be provided.

## Description

### [Technical Field]

Various embodiments disclosed herein relate to an electronic device for controlling quick movement of a cursor and an operation method thereof.

### [Background Art]

A user-portable electronic device (e.g., a notebook computer) may provide almost the same functions as those provided by a desktop computer. Accordingly, demand for office use in corporations, as well as among general individual users, is on the rise.

The notebook computer may include a touch screen and a keyboard including multiple keys as input devices. In addition, the notebook computer may include a touch pad as an input device which may point and click a specific location in a display. A user of the notebook computer may transfer an input through a touch screen, multiple keys, or a touch pad to control the notebook computer.

For example, in case that a touch pad is used as an input means in a separated state from a display like in the case of a notebook computer, the touch pad may serve as a mouse used for moving a pointer displayed on a display. Here, when the touch pad comes in contact with a finger of the user, data corresponding to a contact location of the finger of the user may be converted into a coordinate value with respect to the display and then the pointer displayed on the display may be moved.

### [Detailed Description of the Invention]

### [Technical Problem]

In case that a notebook has a touch pad as an input device for a user to point and click on a specific location on a display, the user may quickly and intuitively access an approximate location on a screen, but a pointer displayed on the display may be displayed by moving as much as a distance moved after the user's touch input. Accordingly, in case of moving the pointer over the entire area of the display, a movement amount according to the user's touch input is bound to increase. However, due to the limited area of the touch pad, repetitive touch inputs may be required within the touch pad to move the pointer from one end of the display screen to the other end.

Therefore, various embodiments disclosed herein may provide an electronic device for controlling movement of the pointer and an operation method thereof.

### [Technical Solution]

According to various embodiments, an electronic device may include a first housing including a first surface, and a second surface facing a direction opposite to a direction in which the first surface is facing, a second housing including a third surface corresponding to the first surface of the first housing, and a fourth surface facing a direction opposite from a direction in which the third surface is facing, a hinge rotatably connecting the first housing and the second housing, a display disposed on the first surface of the first housing, a touch pad disposed on the third surface of the second housing, and at least one processor, wherein the at least one processor may be configured to display a pointer on the display, based on receiving a preset input, identify a touch input moving from an initial input location on the touch pad, and, in response to the touch input, move the pointer at a speed corresponding to a movement distance of the touch input, according to a pointer movement method corresponding to the preset input.

According to various embodiments, a method for controlling movement of a pointer in an electronic device may include an operation of displaying the point on a display of the electronic device, an operation of identifying, based on receiving a preset input, a touch input moving from an initial input location on a touch pad of the electronic device, and an operation of moving, in response to the touch input, the pointer at a speed corresponding to a movement distance of the touch input, according to a pointer movement method corresponding to the preset input.

### [Advantageous Effects]

According to various embodiments, a movement speed of a pointer may be freely and selectively controlled based on a user input.

According to various embodiments, the pointer displayed on a display may be automatically and quickly moved with a minimum user input after a touch on a touch pad in an electronic device like a notebook computer, thereby improving user convenience.

It will be appreciated by a person skilled in the art that effects which may be achieved from the disclosure are not limited to the effects described above and other effects that are not described above will be clearly understood from the following detailed description.

### [Brief Description of Drawings]

FIG. 1 is a block diagram illustrating an electronic device in a network environment according to various embodiments.
FIG. 2A is a diagram illustrating an example of an electronic device 200 according to various embodiments.
FIG. 2B is a perspective diagram illustrating a first arrangement of a touch pad of an electronic device according to various embodiments.
FIG. 2C is a perspective diagram illustrating a second arrangement of a touch pad of an electronic device according to various embodiments.
FIG. 3 is a perspective diagram illustrating a foldable electronic device including a flexible display according to various embodiments.
FIG. 4 is an internal block diagram of an electronic device according to various embodiments.
FIG. 5 is an exemplary screen diagram illustrating quick movement of a pointer based on a user input according to various embodiments.
FIG. 6 is an operational flowchart of an electronic device according to various embodiments.
FIG. 7 is a detailed operational flowchart of an electronic device for quick movement of a pointer according to various embodiments.
FIG. 8 is an exemplary diagram illustrating a coordinate mapping method between a touch pad and a display for quick movement of a pointer according to various embodiments.
FIG. 9 is an exemplary diagram illustrating a screen interface of a touch pad of an electronic device for quick movement of a pointer according to various embodiments.
FIG. 10 is a diagram illustrating a guide circle indicating a movement path of a pointer on a display according to various embodiments.

In connection with the description of the drawings, like or similar reference numerals may be used for like or similar elements.

### [Mode for Carrying out the Invention]

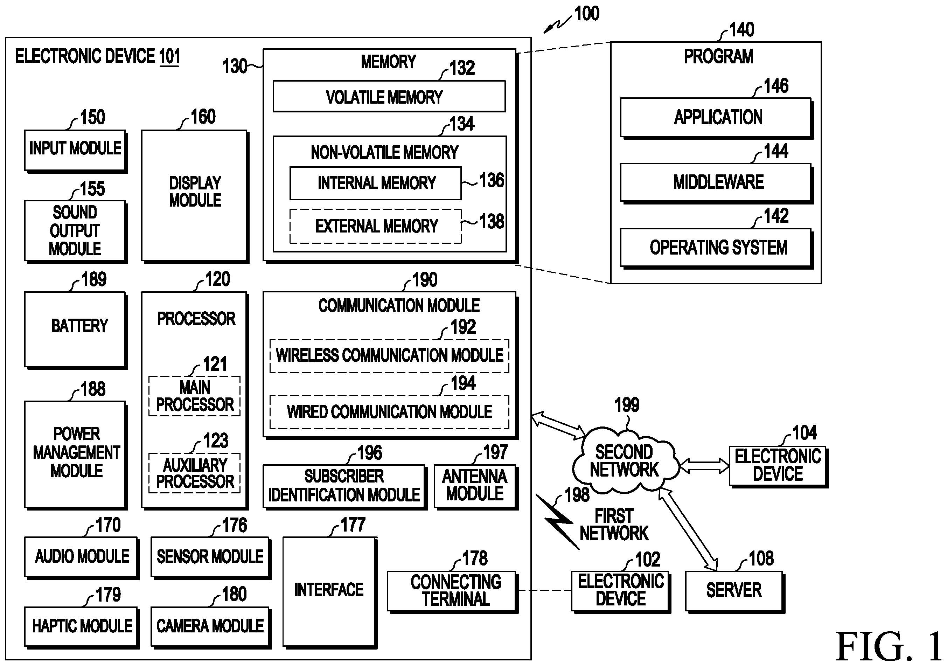

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in nonvolatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

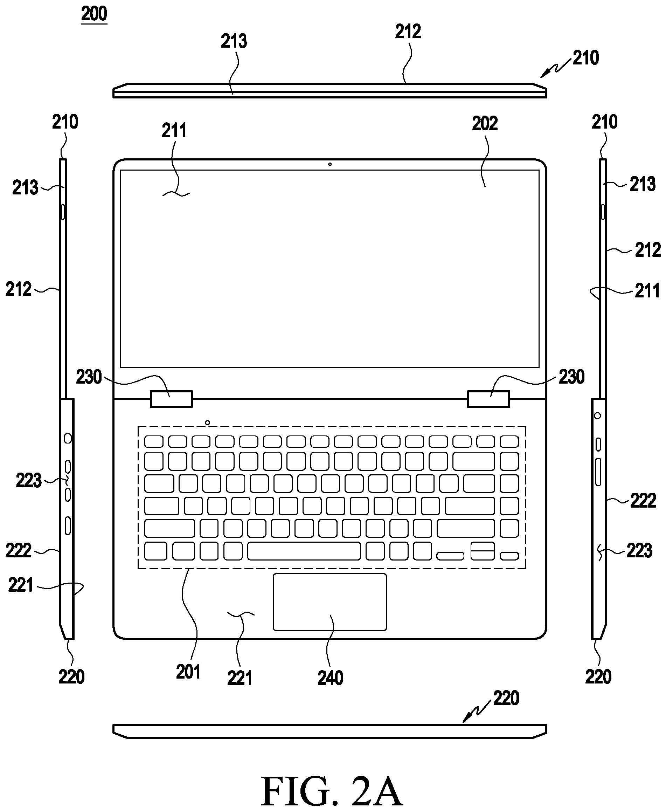

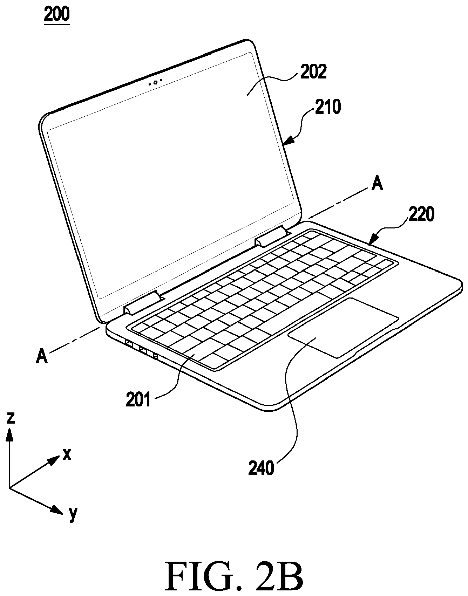

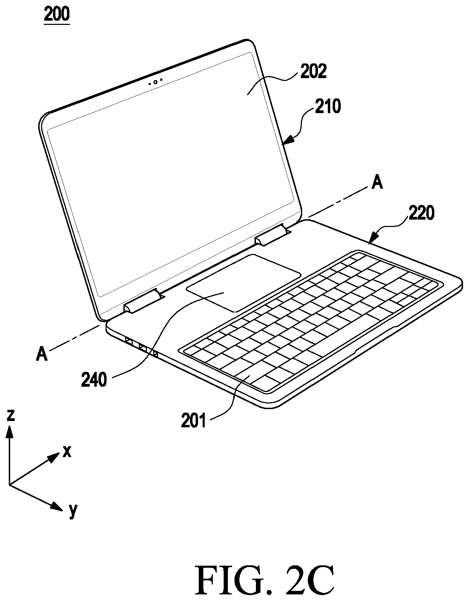

FIG. 2A is a diagram illustrating an example of an electronic device 200 according to various embodiments. FIG. 2B is a perspective diagram illustrating a first arrangement of a touch pad of an electronic device according to various embodiments, and FIG. 2C is a perspective diagram illustrating a second arrangement of a touch pad of an electronic device according to various embodiments.

According to various embodiments, the electronic device 200 may include various types of computers. For example, the electronic device 200 may include a notebook computer including a standard notebook, an ultra-book, a net book, and a tab book, a laptop computer, a tablet computer, and a desktop computer. Furthermore, without limitation to what is described above, the electronic device 200 may include housings to be described below and a hinge 230 for rotatably connecting the housings and may be implemented as various types of electronic devices 200 having multiple keys 201 disposed on one housing thereof. For example, the electronic device 200 may include an electronic device such as a smartphone or a tab book.

According to various embodiments, as shown in FIG. 2A to FIG. 2C, the electronic device 200 may include housings (e.g., a first housing 210 and a second housing 220) rotatably connected to each other and devices (e.g., multiple keys 201, a display 202, and a touch pad 240) arranged on each housing. Without limitation to what is described above, various types of devices (or hardware) may be arranged on the housings or in the housing in FIG. 2A to FIG. 2C. For example, the devices described with reference to FIG. 1 may be arranged on (e.g., on external surfaces) the housings (e.g., the first housing 210 and the second housing 220) or in (e.g., in an internal space formed by external surfaces) the housings. Hereinafter, an example of the housings (e.g., the first housing 210 and the second housing 220) included in the electronic device 200 and the devices arranged on the housings will be further described.

According to various embodiments, each of multiple housings (e.g., the first housing 210 and the second housing 220) may include multiple external surfaces. For example, referring to FIG. 2A to FIG. 2C, multiple external surfaces of a housing (e.g., the first housing 210 or the second housing 220) may include a first surface 211 or 221 (or upper surface), a second surface 212 or 222 (or lower surface) facing a direction opposite to the first surface 211 or 221, and third surfaces 213 and 223 (or lateral surfaces) disposed between the first surface 211 or 221 and the second surface 212 or 222 and connecting the first surface 211 or 221 and the second surface 212 or 222. The upper surface, the lower surface, and the lateral surface may be defined in a state in which the housings (e.g., the first housing 210 and the second housing 220) are unfolded as shown in FIG. 2A but are not limited thereto. A predetermined space (not shown) may be formed inside a housing (e.g., the first housing 210 and the second housing 220) by the multiple external surfaces (e.g., the upper surface, the lower surface, and the lateral surfaces). Without limitation to what is described in FIG. 2A, the electronic device 200 may be implemented to include three or more housings.

According to various embodiments, the multiple housings (e.g., the first housing 210 and the second housing 220) may be connected to each other to be rotatable along a rotation axis in A-A direction by the hinge 230 as shown in FIG. 2A. Without limitation to what is described in FIG. 2A, the hinge 230 may be implemented to have various shapes and structures. For example, the hinge 230 may be implemented as a hinge 230 having a multijoint structure. Furthermore, without limitation to what is described above, the electronic device 200 may be implemented to include various types of structures for rotatably connecting the housings (e.g., the first housing 210 and the second housing 220) in addition to the above-described hinge 230. Each of the housings may rotate around the hinge 230. For example, in case that one housing (e.g., the first housing 210) rotates around the hinge 230 in one direction (e.g., a counterclockwise direction), an upper surface (e.g., 211) of the one housing (e.g., the first housing 210) and an upper surface (e.g., 221) of another housing (e.g., the second housing 220) may face each other, and a lower surface (e.g., 212) of the one housing (e.g., the first housing 210) and a lower surface (e.g., 222) of the other housing (e.g., the second housing 220) may face different directions from each other. For another example, in case that one housing (e.g., the first housing 210) rotates around the hinge 230 in another direction (e.g., a clockwise direction), an upper surface (e.g., 211) of the one housing (e.g., the first housing 210) and an upper surface (e.g., 221) of another housing (e.g., the second housing 220) may face different directions from each other, and a lower surface (e.g., 212) of the one housing (e.g., the first housing 210) and a lower surface (e.g., 222) of the other housing (e.g., the second housing 220) may face each other.

In case that the other housing (e.g., the second housing 220) rotates around the hinge 230, surfaces of the housings (e.g., the first housing 210 and the second housing 220) may face predetermined directions contrary to the case in which the one housing (e.g., the first housing 210) rotates. As at least a portion of the housings rotates around the hinge 230, a predetermined folding angle may be formed between the housings (e.g., the first housing 210 and the second housing 220). For example, as shown in FIG. 2B and FIG. 2C, a folding angel between the upper surfaces of the housings (e.g., the first housing 210 and the second housing 220) may be formed to have an acute angle, an obtuse angle, a flat angle, and an angle equal to or greater than a flat angle.

According to various embodiments, devices (e.g., the display 202, the touch pad 240, and the multiple keys 201) may be arranged on the external surfaces (e.g., the upper surface, the lower surface, and the lateral surfaces) of a housing (e.g., the first housing 210 or the second housing 220) of the electronic device 200 or in a predetermined space formed by the external surfaces.

In an embodiment as shown in FIG. 2A, the display 202 may be disposed in one housing (e.g., the first housing 210). The display 202 may correspond to a touch screen including various sensors (e.g., a touch sensor and a pressure sensor) for sensing a user input.

In an embodiment as shown in FIG. 2A, the multiple keys 201 may be arranged in another housing (e.g., the second housing 220) different from the housing in which the display 202 is disposed. Meanwhile, without limitation to what is illustrated and/or described, various types of physical keys or electronic keys (e.g., a touch screen on which electronic keys are displayed) may be realized on the housing in addition to the multiple keys 201 of a keyboard.

Furthermore, according to an embodiment, as shown in FIG. 2A to FIG. 2C, the second housing 220 may further include a touch pad 240 for a touch input as an input device in addition to the multiple keys 201.

Referring to FIG. 2B, the touch pad 240 according to an embodiment may be disposed on the upper surface (e.g., 221) of the housing (e.g., the second housing 220) of the electronic device 200. As shown in FIG. 2B, the touch pad 240 may be disposed at a center area of a lower end of the multiple keys 201. According to another embodiment, as shown in FIG. 2C, the touch pad 240 may be disposed on the upper surface (e.g., 221) of the housing (e.g., the second housing 220) at an upper end of an area in which the multiple keys 201 are arranged. However, the disposition location of the touch pad 240 is not limited thereto and the touch pad may be disposed on a predetermined location on the upper surface 221 of the housing (e.g., the second housing 220). Although the shape of the touch pad 240 in the form of a rectangle is exemplified in FIG. 2A to FIG. 2C, various modifications such as a circular shape and an elliptical shape may be possible.

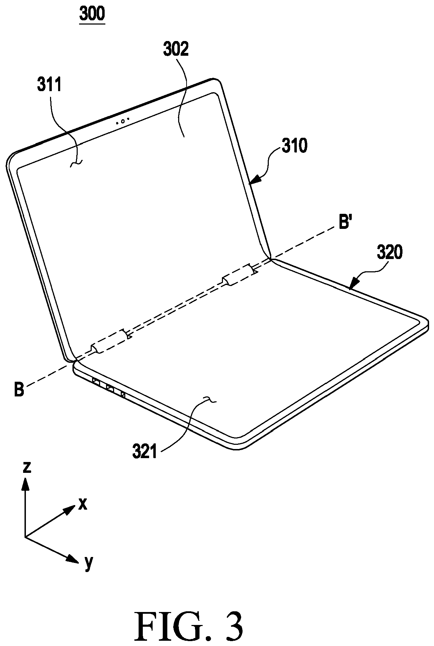

The electronic device 200 in FIG. 2A to FIG. 2C may correspond to an electronic device 300 including a flexible display as shown in FIG. 3. However, an embodiment is not limited thereto, and the housings (e.g., the first housing 210 and the second housing 220) of the electronic device 200 may be integrally formed or the housings (e.g., the first housing 210 and the second housing 220) may be configured to be separable or couplable.

FIG. 3 is a perspective diagram illustrating a foldable electronic device including a flexible display according to various embodiments. The touch pad 340 described with reference to FIG. 3 may be at least partially similar to or the same as the touch pad 240 in FIG. 2A to FIG. 2C, and thus an overlapping description thereof may be omitted.

Referring to FIG. 3, the foldable electronic device 300 may include a foldable housing 310 and 320. Here, the foldable housing 310 and 320 may include a first housing 310 and a second housing 320, and the first housing 310 and the second housing 320 may be arranged on opposite sides around a rotation axis B-B. An angle or distance between the first housing 310 and the second housing 320 may vary according to whether the foldable electric device 300 is in an unfolded state, a folded state, or partially unfolded (or partially folded) intermediate state. Here, the partially unfolded (or partially folded) intermediate state may be referred to as a folding state or a folding angle.

According to various embodiments, a display 302 (e.g., a flexible display) may correspond to a display having at least a partial area thereof transformable to a flat surface or a curved surface. In an embodiment, the display 302 may include a first surface 311 (or a first display area) and a second surface 321 (or a second display area) around the rotation axis B-B and areas of the display 302 may be divided with reference to the rotation axis B-B. As shown in FIG. 3, in a partially unfolded intermediate state based on the rotation axis B-B, the second housing 320 of the foldable electronic device 300 may come in contact with a contact surface (e.g., a floor or table) and the first housing 310 may be in an upright state based on the contact surface.

According to various embodiments, as shown in FIG. 3, the touch pad 340 may be included in the display 302 (e.g., a flexible display) to form a layer structure.

According to an embodiment, in the partially unfolded (or partially folded) intermediate state, the touch panel 340 may operate as an input panel for the display 302. For example, the touch panel 340 may be realized as a touch screen panel and may operate as an input panel for a first surface 311 (or the first display area) in a predetermined location on the upper surface (e.g., 321) of the housing (e.g., the second housing 320) in case of the partially unfolded (or partially folded) intermediate state. For example, a user input with respect to the touch pad 340 may correspond to an input for controlling an object displayed on the display 302.

As shown in FIG. 2A to FIG. 3, the disposition location of the touch pad 240 or 340 is not limited thereto and the touch pad may be disposed on a predetermined location on the upper surface 221 or 321 of the housing (e.g., the second housing 220 or 320). Meanwhile, without limitation to what is illustrated and/or described, various types of physical keys or electronic keys (e.g., a touch screen on which electronic keys are displayed) may be realized on the housing in addition to the touch pad 340.

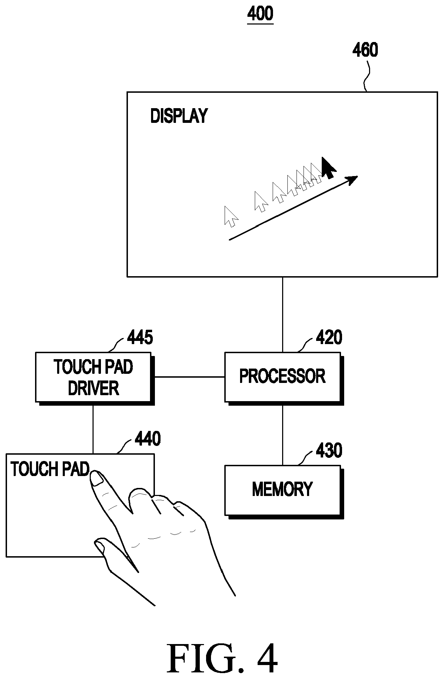

According to an embodiment, the touch pad 240 or 340 shown in FIG. 2A to FIG. 3 may detect a pressing pressure of the user in addition to detection of the touch input of the user. To this end, the touch pad 240 or 340 may be configured to include a pressure sensor to detect a pressing caused by the user. According to an embodiment, the pressing pressure of the user may be used to control automatic movement of a pointer displayed on the display 202 or 302. The automatic movement of the pointer displayed on the display 202 or 302 will be described in detail with reference to FIG. 4.

FIG. 4 is an internal block diagram of an electronic device according to various embodiments.

Referring to FIG. 4, the electronic device 400 may include at least one processor 420, a memory 430, a display 460 (e.g., the display device 160 in FIG. 1), a touch pad 440, and a touch pad driver 445. Without limitation to the configuration shown in FIG. 4, the electronic device 400 may be implemented to include more components or less components than those shown in FIG. 4.

According to various embodiments, the memory 430 may be electrically connected to the processor 420 and may store information related to an operation corresponding to an automatic movement mode of the pointer. For example, the memory 430 may store information for controlling a movement speed and a direction of the pointer in response to a touch input in case of converting to the automatic movement mode of the pointer. Furthermore, the memory 430 may store a program (or application, algorithm, or processing loop) for calculating information (e.g., coordinate information and/or displacement information) with respect to a location of an input means, such as a finger, from data of the touch pad 440.

According to various embodiments, the touch pad 440 may detect an input by the user. For example, a user input with respect to the touch pad 440 may operate as an input panel for controlling an object (e.g., the pointer) displayed on the display 460. According to an embodiment, the touch pad 440 may include at least one sensor for detecting a user input, for example, a touch, a drag, a multi-touch, a touch with a predetermined strength (e.g., a force touch or press pressure) with respect to the touch pad 440.

According to various embodiments, the touch pad 440 may be implemented in a manipulative way, such as a joystick, as an input device for receiving a command or information by a touch operation. For example, the touch pad 440 may operate in the same manner as a joystick to change a location of the pointer.

According to various embodiments, the touch pad 440 may include a haptic module (e.g., the haptic module 179 in FIG. 1) for informing the user of conversion to or releasing of the automatic movement mode of the pointer. Alternatively, the haptic module may be disposed at a location corresponding to the touch pad 440. According to an embodiment, the haptic module may provide (or output) a tactile feedback to the user in a state in which the user's finger is put on the touch pad 440. For example, when a movement speed of the pointer gradually increases proportionally to a movement distance of the touch input, it may be informed the user that the movement speed of the pointer is changed or informed same through the tactile feedback so that users may experience a sense of speed. For example, when the user moves within an area of the touch pad 400 and returns to an original location, the tactile feedback may be provided.

According to various embodiments, the touch pad driver 445 may control the touch pad 440 to detect a touch input with respect to a specific location of the touch pad 440 by measuring a change in a signal (e.g., a capacitance) for the specific location of the touch pad 440 and provide information (e.g., a location, area, pressure, or time) on the detected touch input to the processor 420. Here, the touch pad driver may be referred to as a touch sensor IC.

According to an embodiment, the touch pad driver 445 may sense whether a touch is conducted or not and/or touch coordinates based on a change in a capacitance (e.g., a mutualcapacitance and/or a self-capacitance) at an electrode of the touch pad 440 and transmit same to the processor 420.

According to various embodiments, the display 460 may concurrently support an input/output function of data. According to an embodiment, the display 460 may display the pointer (or cursor) for pointing an input location of information to be input by the user. For example, the display 460 may display a graphic user interface of an application executed, and the user may move the pointer within a screen displayed on the display 460 by using the touch pad 440 or select a specific object. According to an embodiment, the display 460 may be implemented as a touch screen. The display 460 may include the display module 160 described above with reference to FIG. 1.

According to various embodiments, the at least one processor 420 may correspond to the processor 120 described above with reference to FIG. 1.

According to various embodiments, the processor 420 may detect a physical state and/or a change of the physical state of the electronic device 400. For example, the processor 420 may determine (or calculate) an angle between the upper surface (e.g., 211) of the first housing 210 of the electronic device 400 and the upper surface (e.g., 221) of the second housing 220 based on at least one sensor included in the electronic device 400 and accordingly, may determine that the electronic device 400 is in the partially unfolded (or partially folded) state.

According to various embodiments, the processor 420 may display various objects, contents, or a screen of an application executed by the electronic device 400 on the display 460 in an open state in which the first housing 210 is maintained to have a predetermined angle with respect to the second housing 220.

According to various embodiments, the processor 420 may acquire touch coordinates on the touch pad 440 through the touch pad driver 445. According to an embodiment, the processor 420 may determine whether to activate the automatic movement mode of the pointer based on information (e.g., a location, area, pressure, or time) on the detected touch input.

According to an embodiment, the processor 420 may identify whether a preset input is received through the touch pad 440 to determine whether to activate the automatic movement mode of the pointer. For example, the preset input may include at least one of a touch pressure, a touch contact time and a designated key.

The processor 420 may recognize a touch pressure through the touch pad 440 to perform conversion to the automatic movement mode of the pointer based on the touch pressure. For example, in case that the user presses a surface of the touch pad 440 with a finger pressure, the pressing pressure may be detected through a sensor included in the touch pad 440. If the user presses the touch pad 440 with a pressure equal to or higher than a threshold pressure, the pressing pressure may be detected by the sensor. Accordingly, in case that the pressing pressure is detected, the processor 420 may perform conversion to a mode for automatically moving the pointer. In this case, the mode for automatically moving the pointer may correspond to a mode in which the pointer continuously moves in the direction the pointer was moving without stopping unless the touch is released even in a state in which the user touches and drags the touch pad 440 and stops without moving a finger.

According to an embodiment, activation to the automatic movement mode may be triggered by a predetermined method, such as a touch contact time (e.g., a long press), a double finger pressure, and a designated specific key in addition to a touch pressure. On the contrary, the automatic movement mode may be deactivated when the touch input is released.

For example, in case that the user presses the surface of the touch pad 440 with a finger for a predetermined period of time or more, a touch contact time may be identified through the touch input received through the touch pad 440 and it may be identified whether the touch contact time exceeds a threshold time. Here, a threshold touch pressure, a threshold touch contact time, and a designated specific key may be defined by the user or defined when the electronic device is manufactured.

According to various embodiments, when the automatic movement mode of the pointer is activated, the processor 420 may measure absolute coordinates of a location in which the user presses the touch pad 440 through the touch pad driver 445 and configure an initial input location (or initial touch location) as a reference point.

According to various embodiment, the processor 420 may calculate a movement distance and a movement direction of the touch input through the touch pad 440 based on the initial input location in a state in which the touch input is maintained. The processor 420 may increase a movement speed of the pointer to be moved in the calculated movement direction corresponding to the calculated movement distance.

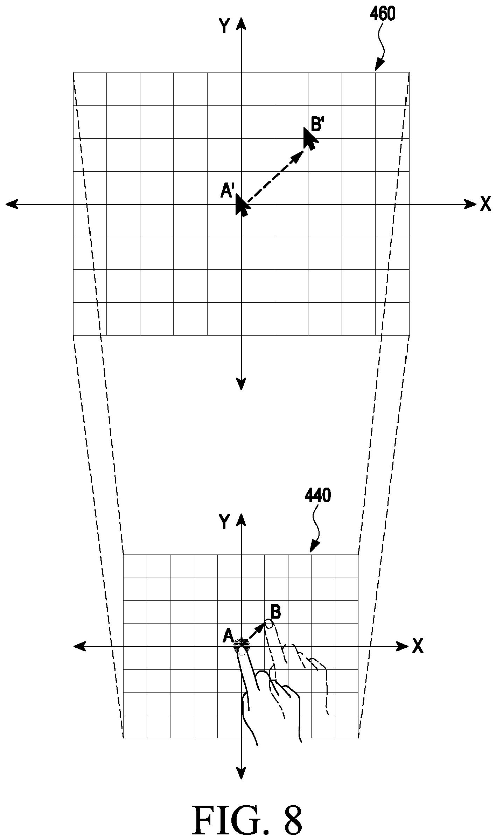

According to an embodiment, the processor 420 may control the pointer to have a speed gradually increased depending on an amount of movement dragged after touching, for example, proportionally to the amount of movement. According to various embodiments, the processor 420 may control the movement speed of the pointer to be continuously maintained without stopping while the touch input is maintained. For example, even in case that the user touches the touch pad 440 and then stops the touch movement at a first location, the processor 420 may control the pointer to move at a predetermined speed. In this case, the processor 420 may control the pointer to continuously move in the same direction as the movement direction of the touch input. A coordinate mapping relationship between the touch pad 440 and the display 460 for moving the pointer in response to the movement distance and the movement direction of the touch input will be described below with reference to FIG. 8.

According to various embodiments, an electronic device (e.g., the electronic device 400 in FIG. 4) may include a first housing 210 including a first surface 211, and a second surface 212 facing a direction opposite to a direction in which the first surface 211 is facing, a second housing 220 including a third surface 221 corresponding to the first surface 211 of the first housing 210, and a fourth surface 222 facing a direction opposite to a direction in which the third surface 221 is facing, a hinge 230 rotatably connecting the first housing 210 and the second housing 220, a display (e.g., the display 460 in FIG. 4) disposed on the first surface 211 of the first housing 210, a touch pad (e.g., the touch pad 440 in FIG. 4) disposed on the third surface 221 of the second housing 220, and at least one processor (e.g., the processor 420 in FIG. 4), wherein the at least one processor 420 is configured to display a pointer on the display 460, based on receiving a preset input, identify a touch input moving from an initial input location on the touch pad, and, in response to the touch input, move the pointer at a speed corresponding to a movement distance of the touch input, according to a pointer movement method corresponding to the preset input.

According to various embodiments, the at least one processor may be configured to move the pointer in a direction identical to the movement direction of the touch input and at a speed corresponding to a movement distance of the touch input.

According to various embodiments, the at least one processor may be configured to maintain the movement speed of the pointer in case that the touch input is maintained in a first location to which the touch input has been moved from the initial input location.

According to various embodiments, the preset input may include at least one of a touch pressure, a touch contact time and a designated key.

According to various embodiments, the at least one processor may be configured to identify whether at least one condition among a touch pressure higher than a threshold pressure, a touch contact time longer than a threshold time, or a designated key is satisfied, and activate a mode configured to automatically move the pointer according to a pointer movement method corresponding to the preset input in case that the at least one condition is satisfied.

According to various embodiments, the at least one processor may be configured to deactivate the mode configured to automatically move the pointer in case of releasing the touch input.

According to various embodiments, the at least one processor may be configured to identify an initial input location on the touch pad in response to the activation of the mode configured to automatically move the pointer.

According to various embodiments, the at least one processor may be configured to calculate a movement distance and a movement direction of the touch input based on the initial input location in a state in which the touch input is maintained and increase a movement speed of the pointer to be moved in the calculated movement direction corresponding to the calculated movement distance.

According to various embodiments, the at least one processor may be configured to maintain the movement speed of the pointer while the touch input is maintained.

According to various embodiments, the at least one processor may be configured to stop movement of the pointer in case of releasing the touch input.

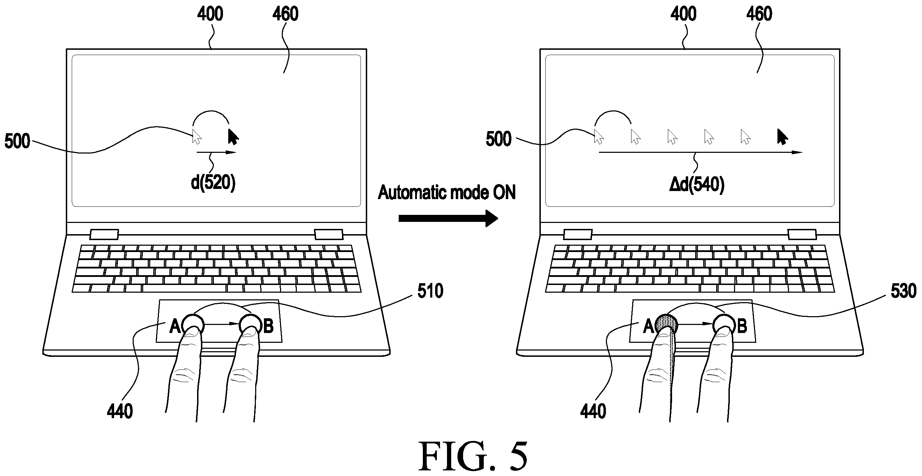

FIG. 5 is an exemplary screen diagram illustrating quick movement of a pointer based on a user input according to various embodiments.

Referring to FIG. 5, the electronic device 400 may display, on the display 460, a pointer 500 moving together in response to touch movement 510 on the touch pad 440 before the automatic movement mode of the pointer is turned on. For example, referring to a mode before the automatic movement mode is activated as a normal mode, a movement distance (d) 520 of the pointer 500 in the normal mode may correspond to a touch movement distance 510 on the touch pad 440. For example, assuming that the touch movement distance 510 from A to B on the touch pad 440 is, for example, 100 pixels, the pointer 500 on the display 460 may also be displayed in a stopped state after moving by 100 pixels.

On the other hand, in case that the automatic movement mode of the pointer is turned on, the electronic device 400 may display, on the display 460, the pointer 500 which continuously moves in response to touch movement on the touch pad 440. The movement (Δd) 540 of the pointer 500 in the automatic movement mode may correspond to a touch movement distance and a movement direction 530 on the touch pad 440. For example, assuming that the touch movement distance 530 from A to B on the touch pad 440 is, for example, 200 pixels in a left direction, the pointer 500 on the display 460 may be displayed as moving at 200 pixel/sec in the left direction.

According to an embodiment, the automatic movement mode of the pointer may be turned on in case that the user presses the touch pad 440 with a pressure equal to or higher than a threshold pressure. According to an embodiment, in case that the automatic movement mode is activated, visual feedback made by changing a color of the pointer 500 or tactile feedback may be provided so that the user recognizes a mode conversion. According to an embodiment, activation to the automatic movement mode may be triggered by a predetermined input method, such as a touch contact time (e.g., a long press), a double finger pressure, and a designated specific key in addition to a touch pressure. On the contrary, the automatic movement mode may be deactivated together with a movement stop of the moving pointer when the touch input is released.

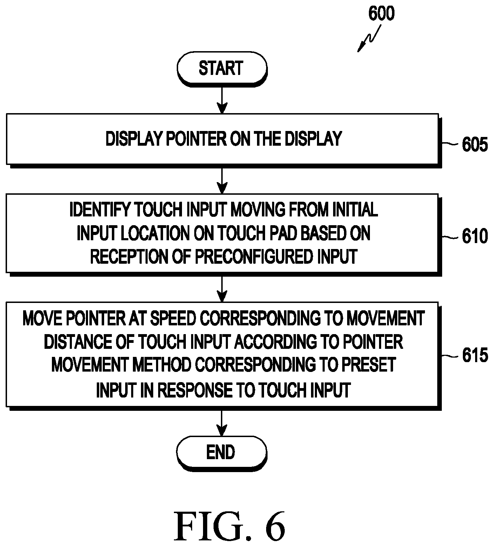

FIG. 6 is an operational flowchart 600 of an electronic device according to various embodiments. An operation method may include operation 605 to operation 615. Each step/operation of the operation method may be performed by at least one electronic device (e.g., the electronic device 101 in FIG. 1 or the at least one processor 420 of the electronic device 400 in FIG. 4). In an embodiment, at least one of operation 605 to operation 615 may be omitted, the order of some operations may be changed, or another operation may be added.

Referring to FIG. 6, in operation 605, the electronic device 400 may display the pointer on the display.

In operation 610, the electronic device 400 may identify a touch input moving from an initial input location on the touch pad based on a reception of a preset input.

According to an embodiment, the preset input may include at least one of a touch pressure, a touch contact time and a designated key.

According to an embodiment, the electronic device 400 may identify whether at least one condition among a touch pressure higher than a threshold pressure, a touch contact time longer than a threshold time and a designated key is satisfied, and activate a mode configured to automatically move the pointer according to a pointer movement method corresponding to the preset input in case that the at least one condition is satisfied.

According to an embodiment, the electronic device 400 may deactivate the mode configured to automatically move the pointer in case of releasing the touch input.

According to an embodiment, the electronic device 400 may identify an initial input location on the touch pad in response to the activation of the mode configured to automatically move the pointer.

In operation 615, in response to the touch input, the electronic device 400 may move the pointer at a speed corresponding to a movement distance of the touch input, according to a pointer movement method corresponding to the preset input.

According to an embodiment, the electronic device 400 may move the pointer in a direction identical to the movement direction of the touch input and at a speed corresponding to a movement distance of the touch input.

According to an embodiment, the electronic device 400 may maintain the movement speed of the pointer in case that the touch input is maintained in a first location to which the touch input has been moved from the initial input location.

According to an embodiment, the electronic device 400 may calculate a movement distance and a movement direction of the touch input based on the initial input location in a state in which the touch input is maintained and increase a movement speed of the pointer to be moved in the calculated movement direction corresponding to the calculated movement distance.

According to an embodiment, the electronic device 400 may maintain the movement speed of the pointer while the touch input is maintained.

According to an embodiment, the electronic device 400 may stop movement of the pointer in case of releasing the touch input.

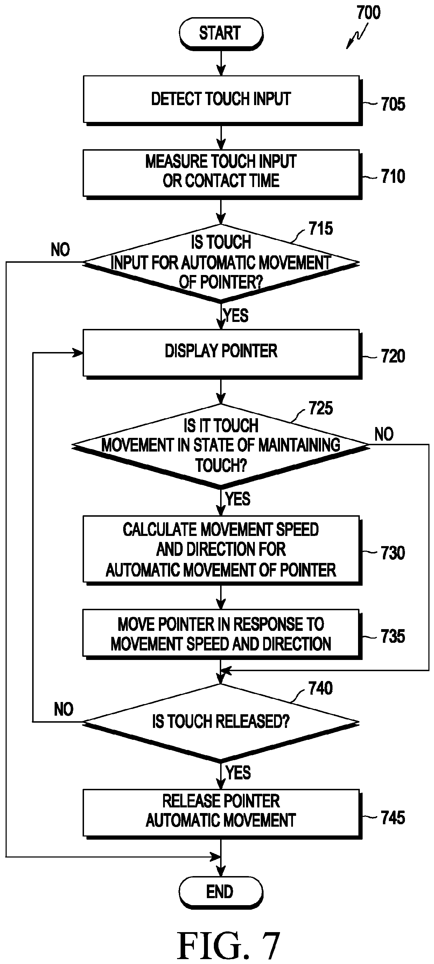

FIG. 7 is a detailed operational flowchart 700 of an electronic device for quick movement of a pointer according to various embodiments. The operations shown in FIG. 7 are not limited to the described order and may be performed in various orders. In addition, according to various embodiments, more operations or the less operations than the operations shown in FIG. 7 may be performed. Hereinafter, FIG. 7 will be described with reference to FIG. 8 to FIG. 10.

Referring to FIG. 7, in operation 705, the electronic device 400 may detect a touch input. In operation 710, the electronic device 400 may measure a touch pressure or a touch contact time. In operation 715, the electronic device 400 may identify whether the touch input is for the automatic movement of the pointer. According to an embodiment, the electronic device 400 may determine that the touch input is for the automatic movement mode of the pointer in case that at least one of a case of exceeding a preset pressure and a case of exceeding a preset contact time is satisfied. According to an embodiment, activation to the automatic movement mode may be triggered by a predetermined method, such as a double finger pressure or a designated specific key in addition to a touch pressure and a touch contact time (e.g., a long press).

In operation 720, the electronic device 400 may display the pointer in response to identification of the touch input for the automatic movement of the pointer. For example, in case that the electronic device 400 operates in a standby mode waiting for a user input, the display 460 may display a standby screen. Here, the pointer may be displayed on a screen of the display 460. According to various embodiments, the electronic device 400 may display the pointer on the standby screen in response to the detection of the touch input.

In operation 725, the electronic device 400 may identify if there is touch movement in a state in which the touch is maintained. For example, the electronic device 400 may detect a touch and drag indicating touch movement of the user in a state in which a touch contact is maintained. Here, the touch and drag may correspond to touch movement by a touch pressure relatively smaller than the preset touch pressure. On the contrary, in case that touch movement is not identified in a state in which a touch is maintained, the electronic device 400 may identify releasing of a touch in operation 740.

In response to the identification of touch movement in a state in which a touch is maintained, in operation 730, the electronic device 400 may calculate a movement speed and a movement direction for the automatic movement of the pointer. For example, the electronic device 400 may calculate a movement distance and a movement direction of a touch input and in response to this, may determine a movement speed and a movement direction of a pointer to be moved. A detailed description thereof will be given with reference to FIG. 8.

In operation 735, the electronic device 400 may move the pointer in response to the movement speed and the movement direction, and in operation 740, the electronic device 400 may identify if a touch is released. As described above, the pointer which continuously moves without stopping may be displayed based on the movement distance and the movement direction of the touch input on the display 460 as long as the touch is not released. In operation 745, the electronic device 400 may release automatic movement of the pointer in response to the identification of touch release. For example, when the touch is released, movement of the pointer may be stopped.

FIG. 8 is an exemplary diagram illustrating a coordinate mapping method between a touch pad and a display for quick movement of a pointer according to various embodiments.

Referring to FIG. 8, the touch pad 440 may report a touch input location to the processor 420 in a form of (x, y) coordinates, for example. For example, assuming that an initial touch input location is (x0, y0), the electronic device 400 may configure the initial touch input location as a reference point. Assuming that the touch input on the touch pad 440 moves by 1 in the x-axis and 1 in the y-axis at the coordinates (x0, y0), before the activation of the automatic movement mode, when the user performs a touch and then a drag, the pointer to be displayed on the display 460 may also be displayed by moving by 1 in the x-axis and by 1 in the y-axis in response to the movement of the touch input.

On the other hand, if the touch input moves by 1 in the x-axis and 1 in the y-axis from the (x0, y0) coordinates on the touch pad 440 when the automatic movement mode is activated, the electronic device 400 may re-measure absolute coordinates on the touch pad 440 and display the pointer to be displayed on the display 460 moving by 2 in the x-axis and 2 in the y-axis.

For example, as shown in FIG. 8, assuming that, based on the x and y axes, the reference point is (1171, 1592), the moved coordinates are (1500, 1368), a variation value of the touch input is (329, -224) and a movement distance is (398), the electronic device 400 may analyze the variation value and the movement distance to measure a movement direction and a movement speed of the touch input and move the pointer in response thereto. Here, since the variation values are positive on the x-axis and negative on the y-axis, the movement direction may be approximately northeast, and the electronic device 400 may move the pointer at a movement speed of distance/sec. Accordingly, the movement speed of the pointer may be doubled when the pointer moves 100 pixels compared to a case in which the pointer moves 200 pixels in response to the touch input. Here, even in a state in which the touch movement is stopped, the electronic device 400 may predict coordinates of the pointer to be moved in response to the movement distance and the movement direction of the touch input based on the reference point. Accordingly, as long as the touch input is not released, a pointer continuously moving in the same direction as the movement direction of the touch input may be displayed even when the touch movement is stopped.

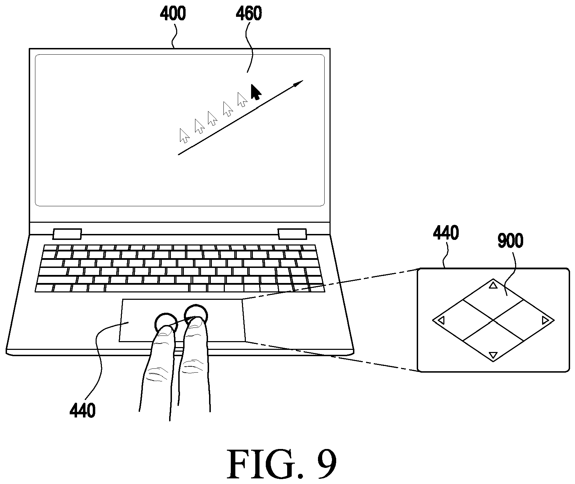

FIG. 9 is an exemplary diagram illustrating a screen interface of a touch pad of an electronic device for quick movement of a pointer according to various embodiments.

As shown in FIG. 9, in case that a mode for automatic movement of the pointer is activated, the electronic device 400 may continuously move and display the pointer on the display 460 in response to the touch input of the user on the touch pad 440. In case that the mode for automatic movement of the pointer is activated, the electronic device 400 may display an object 900 configured to allow the user to recognize the movement of the touch input on the touch pad 440. For example, the object 900 to be displayed on the touch pad 440 may correspond to up and down, and left and right buttons or a joystick.

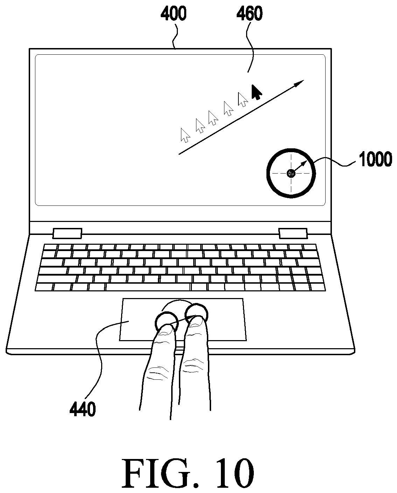

FIG. 10 is a diagram illustrating a guide circle indicating a movement path of a pointer on a display according to various embodiments.

As shown in FIG. 10, the electronic device 400 may display, on the display 460, a guide circle 1000 indicating a movement path of the pointer when the pointer moves. Here, the movement path indicates a movement distance and a movement direction of the pointer and may indicate how much the pointer has moved from a starting point. In this case, the starting point may correspond to an initial input location which the user touches through the touch pad 440 for moving the pointer. According to an embodiment, the movement speed of the pointer may be increased as a distance from the starting point increases. As described above, in case that the movement path along which the pointer moves according to a user's touch manipulation is displayed, the user may easily predict a movement amount of the pointer or a location to which the pointer is to be moved.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing comprising a first surface and a second surface facing a direction opposite to a direction in which the first surface faces;
a second housing comprising a third surface corresponding to the first surface of the first housing and a fourth surface facing a direction opposite to a direction in which the third surface faces;
a hinge configured to rotatably connect the first housing and the second housing;
a display disposed on the first surface of the first housing;
a touch pad disposed on the third surface of the second housing; and
at least one processor,
wherein the at least one processor is configured to:
display a pointer on the display;
based on receiving of a preset input, identify a touch input moving from an initial input location on the touch pad; and
in response to the touch input, move the pointer at a speed corresponding to a movement distance of the touch input, according to a pointer movement method corresponding to the preset input.

2. The electronic device of claim 1, wherein the at least one processor is configured to move the pointer in a direction identical to a movement direction of the touch input and at a speed corresponding to a movement distance of the touch input.

3. The electronic device of claim 2, wherein the at least one processor is configured to maintain a movement speed of the pointer in case that the touch input is maintained in a first location to which the touch input has been moved from the initial input location.

4. The electronic device of claim 1, wherein the preset input comprises at least one of a touch pressure, a touch contact time and a designated key.

5. The electronic device of claim 4, wherein the at least one processor is configured to:
identify whether at least one condition among a touch pressure higher than a threshold pressure, a touch contact time longer than a threshold time, or a designated key is satisfied; and
activate a mode configured to automatically move the pointer according to a pointer movement method corresponding to the preset input in case that the at least one condition is satisfied.

6. The electronic device of claim 5, wherein the at least one processor is configured to deactivate the mode configured to automatically move the pointer in case of releasing the touch input.

7. The electronic device of claim 5, wherein the at least one processor is configured to:
identify the initial input location on the touch pad in response to the activation of the mode configured to automatically move the pointer;
calculate the movement distance and a movement direction of the touch input based on the initial input location in a state in which the touch input is maintained; and
increase a movement speed of the pointer to be moved in the calculated movement direction corresponding to the calculated movement distance.

8. The electronic device of claim 1, wherein the at least one processor is configured to maintain a movement speed of the pointer while the touch input is maintained.

9. The electronic device of claim 1, wherein the at least one processor is configured to stop movement of the pointer in case of releasing the touch input.

10. A method for controlling movement of a pointer in an electronic device, the method comprising:
displaying a pointer on a display of the electronic device;
based on receiving of a preset input, identifying a touch input moving from an initial input location on a touch pad of the electronic device; and
in response to the touch input, moving the pointer at a speed corresponding to a movement distance of the touch input, according to a pointer movement method corresponding to the preset input.

11. The method of claim 10, wherein the moving of the pointer comprises moving the pointer in a direction identical to a movement direction of the touch input and at a speed corresponding to a movement distance of the touch input.

12. The method of claim 11, further comprising maintaining a movement speed of the pointer in case that the touch input is maintained in a first location to which the touch input has been moved from the initial input location.

13. The method of claim 10, further comprising:
identifying whether at least one condition among a touch pressure higher than a threshold pressure, a touch contact time longer than a threshold time, or a designated key is satisfied;
activating a mode configured to automatically move the pointer according to a pointer movement method corresponding to the preset input in case that the at least one condition is satisfied; and
deactivating the mode configured to automatically move the pointer in case of releasing the touch input.

14. The method of claim 13, further comprising identifying the initial input location on the touch pad in response to the activation of the mode configured to automatically move the pointer.

15. The method of claim 14, the moving of the pointer comprises:
calculating the movement distance and a movement direction of the touch input based on the initial input location in a state in which the touch input is maintained; and
increasing a movement speed of the pointer to be moved in the calculated movement direction corresponding to the calculated movement distance.
